# EUROPÄISCHE PATENTANMELDUNG

(11) **EP 0 670 136 A1**
(43) Veröffentlichungstag der Anmeldung: **06.09.1995**
(21) Anmeldenummer: 95101576.7
(22) Anmeldetag: 07.02.1995
(51) Int. Cl.: A47J 27/09, A47J 27/08

(54) **Schnellkochtopf**

(30) Priorität: 18.02.1994 DE 4405268
(71) Anmelder: HEINRICH BAUMGARTEN KG SPEZIALFABRIK FÜR BESCHLAGTEILE, D-57290 Neunkirchen (DE)
(72) Erfinder: Fischbach, Wolfgang, Dipl.-Ing., D-57567 Daaden (DE)
(74) Vertreter: Missling, Arne, Dipl.-Ing.

(57) **Zusammenfassung**

Ein wichtiges Problem bei Dampfdruck-Kochgefäßen besteht in einer Gefahrenabwendung beim Öffnen des beheizten Kochgefäßes; auch durch grobe Gewalt darf der Bajonettverschluß nicht gelöst werden, wenn auf den Deckel noch ein erheblicher Innendruck lastet. Die Erfindung hat eine im Bereich des Bajonettverschlusses angesiedelte Rastung (R) vorgesehen, die beim Verschwenken des Bajonettverschlusses - diesen blockierend - einrastet, so lange eine innendruckabhängige Betätigung nicht durch einen entsprechend abgesunkenen Innendruck, die Rastung lösend, betätigt wird.

## Beschreibung

Die Erfindung betrifft ein Dampfdruck-Kochgefäß, beispielsweise Schnellkochtopf, Schnellkochpfanne oder dergleichen, bestehend aus einem Kochgefäß und einem Deckel, die miteinander mittels eines Bajonettverschlusses verriegelbar sind, der von komplementär angeordneten, jeweils einstückig an dem Kochgefäß und dem Deckel vorgesehenen Verschlußlaschen gebildet wird.

Der Bajonettverschluß eines derartigen Dampfdruck-Kochgefäßes darf nur geöffnet werden, wenn der Innendruck in dem Kochgefäß auf einen geringen, zulässigen Wert abgesunken oder sogar vollständiger Druckausgleich hergestellt ist. Es ist in der Regel möglich, den Innenraum des Kochgefäßes zu entlüften, um den Innendruck abzubauen. Allerdings besteht immer die Gefahr, daß durch Nachheizung aus der in dem Kochgefäß gespeicherten Wärme ein erneuter Überdruck aufgebaut wird, wenn der Deckel nach dem herbeigeführten Druckausgleich nicht sofort geöffnet wird. Ist der Druckunterschied erheblich, läßt sich das Dampfdruck-Kochgefäß nicht öffnen; bei geringerem Druckunterschied aber ist unter Kraftaufwand der Deckel abnehmbar, wobei eine erhebliche Gefährdung durch die auf den Deckel wirkende Druckkraft verbleibt.

Die Erfindung hat sich deshalb die Aufgabe gestellt, ein Dampfdruck-Kochgefäß der eingangs näher bezeichneten Art so auszubilden, daR es solange nicht geöffnet werden kann, wie ein vorgegebener maximaler Innendruck in dem Kochgefäß nicht unterschritten ist. Dabei soll die Anordnung so getroffen sein, daß der Bajonettverschluß auch dann blockiert bleibt, wenn die verwendeten Funktionselemente defekt sind.

Erfindungsgemäß wird die Aufgabe dadurch gelöst, daß eine vorgespannte Gegenfeder zwischen mindestens einem Paar zweier einander zugeordneter Verschlußlaschen des Kochgefäßes und des Deckels angeordnet und auf eine Vorspann-Federkraft vorgespannt ist, durch die - bis zu einen bestimmten Ausgangs-Innendruck des Kochgefäßes - die Verschlußlaschen voneinander so beabstandet sind, daß der Bajonettverschluß gelöst werden kann, und daß dazu an den Verschlußlaschen eine Rastung vorgesehen ist, die den Bajonettverschluß blockiert, wenn der Innendruck den Ausgangs-Innendruck übersteigt und dadurch die Verschlußlaschen gegen die dabei über die Vorspann-Federkraft zunehmende Federkraft der Gegenfeder aufeinander zu bewegt werden.

Auf diese Weise läßt sich innerhalb des beim Öffnen des Kochgefäßes an dem Bajonettverschluß zu überstreichenden Verschlußwinkels eine Kontrollstellung vorsehen, in der bei für das Öffnen unzulässig hohem Innendruck des Kochgefäßes die Rastung betätigt wird und eine weitere, den Deckel freigebende Verschwenkung blockiert ist; vielmehr muß der Innendruck zunächst weiter abgesenkt werden, bis die Rastung entrastet und die Blockierung aufgehoben ist.

Die Rastung kann aus einer in der jeweiligen Verschlußlasche des Kochgefäßes vorgesehenen Rastausnehmung und aus einer an der jeweiligen Verschlußlasche des Deckels angebrachten, in die Rastausnehmung einführbaren Rastklinke bestehen.

Die Rastung läßt sich vorteilhaft ausführen, wenn die Verschlußlasche des Deckels mit einer von der anliegenden Verschlußlasche des Kochgefäßes zurücksetzenden Kröpfung versehen ist, deren abgekröpftes, zu den Verschlußlaschen flächenparalleles Flächenstück in der am Rande der Verschlußlasche befindlichen, wieder in die Ebene der Verschlußlasche zurückkröpfenden Rastklinke endet in der Weise, daß die Rastklinke gerade aus der Rastausnehmung ausgerastet ist, wenn die Verschlußlaschen des Kochgefäßes und des Deckels aneinanderschlagen. Eine solche Kröpfung kann bei der Herstellung des Deckels ohne weiteren Aufwand mit vorgesehen werden, so daß, wie auch bei der Rastausnehmung in der anderen Verschlußlasche, ein zusätzlicher Herstellungsaufwand für die Rastung nicht anfällt.

Die Betätigung für die Rastung besteht bei einer bevorzugten Ausgestaltung der Erfindung aus einem mit einem Anschlagbund an dem Flächenstück anschlagenden, in einer Bohrung des Flächenstückes senkrecht zu diesem verschiebbaren Stützbolzen, der unter dem Einfluß der Federkraft einer an dem Flächenstück gehalterten Gegenfeder so weit in Richtung auf die Verschlußlasche des Kochgefäßes bewegbar ist, daß seine stirnseitige Stützfläche an der Oberfläche der Verschlußlasche des Kochgefäßes anschlägt oder mit deren Ebene bündig ist.

Es ist in einer demgegenüber etwas veränderten Ausführung auch möglich, daß am Umfang des Deckels die als beispielsweise drahtförmige Drehfeder ausgebildete Gegenfeder so befestigt ist, daß sie mit einem ersten ihrer freien Federschenkel eine der Verschlußlaschen des Deckels unterfängt, wobei dieser Federschenkel mit der Federkraft druckbelastend an der zugehörigen Verschlußlasche des Kochgefäßes anliegt. Dadurch ist eine sehr flache, die Kontur des Deckels nur wenig überragende Ausbildung der Rastung und der zugehörigen Betätigung erzielbar.

Im einzelnen ist es dabei zweckmäßig, wenn die Gegenfeder von einem an dem Deckel ortsfesten Widerlager überfangen ist, an welchem einstückig die Rastklinke vorgesehen ist, die am besten in einer an dem ersten Federschenkel ausgebildeten Öse geführt ist. Dabei kann die Gegenfeder auf einem an dem Deckel befestigten Niet gelagert sein und ihre freien Federschenkel können dann in dem gehäuseartigen Widerlager anschlagen.

Die Rastung kann generell in der Weise betätigt werden, daß das Flächenstück einschließlich einem Widerlager für die Gegenfeder durch den auf den Deckel wirkenden Innendruck des Kochgefäßes entlang des an der Verschlußlasche des Kochgefäßes beständig anliegenden Stützbolzens in Richtung auf die Verschlußlasche des Kochgefäßes bewegbar ist, wenn sich die Rastklinke in Front der Rastausnehmung befindet. Der Stützbolzen bleibt demzufolge ortsfest und bildet durch die auf ihm gleitende Verschlußlasche die Führung für den axial bewegten Deckel; eine solche axiale Beweglichkeit erfolgt beim Verschwenken des Deckels einmal fortwährend durch Steigung des Bajonettverschlusses, zum anderen dann, wenn die Kröpfung die Berandung der Verschlußlasche an dem Kochgefäß überstreicht.

Eine gleichförmige Belastung des Deckels erfolgt, wenn zwei an dem Umfang des Deckels diametral gegenüberliegend angeordnete Rastungen einschließlich der zugehörigen Betätigungen vorgesehen sind. Die Vorspannkraft der Gegenfeder ist zweckmäßigerweise einstellbar, um die maximale Druckkraft festzulegen, bei der eine Verrastung gerade noch erfolgt. Es läßt sich einrichten, daß die Rastungen so an den Verschlußlaschen angeordnet sind, daß sie wirksam werden, wenn beim Öffnen des Kochgefäßes etwa der halbe Verschlußwinkel des Bajonettverschlusses überstrichen ist; auf diese Weise können auch bei kurzen Verschlußlaschen Stützbolzen und Halterungen für die Gegenfeder bequem untergebracht werden.

Durch die Erfindung ist eine Fehlbedienung des erfindungsgemäßen Dampfdruck-Kochgefäßes ausgeschlossen, und zwar auch dann, wenn die Betätigung der Rastung gestört ist, denn bei zu hohem Innendruck ist die Rastung in jedem Falle aktiviert, wenn der Bajonettverschluß geöffnet werden soll. Die Rastung ist nur vermeidbar, wenn der Innendruck in dem Kochgefäß verschwindet.

Die Erfindung wird nachstehend an Hand der Zeichnung an einem Ausführungsbeispiel näher beschrieben. Es zeigen
- Fig. 1: ein Dampfdruck-Kochgefäß entsprechend dem Stand der Technik mit einer Kräftebilanz
- Fig. 2: eine Draufsicht auf Fig. 1,
- Fig. 3: eine erfindungsgemäß ausgebildete Einzelheit A aus Fig. 1 in einer ersten Ausführung bei geschlossenem Dampfdruck-Kochgefäß, um 90° versetzt gezeichnet,
- Fig. 4: desgleichen bei beginnender Öffnung,
- Fig. 5: desgleichen mit verriegeltem Bajonettverschluß und
- Fig. 6: desgleichen bei endender Öffnung mit entriegeltem Bajonettverschluß,
- Fig. 7: eine erfindungsgemäß ausgebildete Einzelheit A aus Fig. 1 in einer zweiten Ausführung,
- Fig. 8: eine teilweise geschnittene Druntersicht und
- Fig. 9: einen Schnitt C - C aus Fig. 7,
sämtlich schematisch vereinfacht gezeichnet.

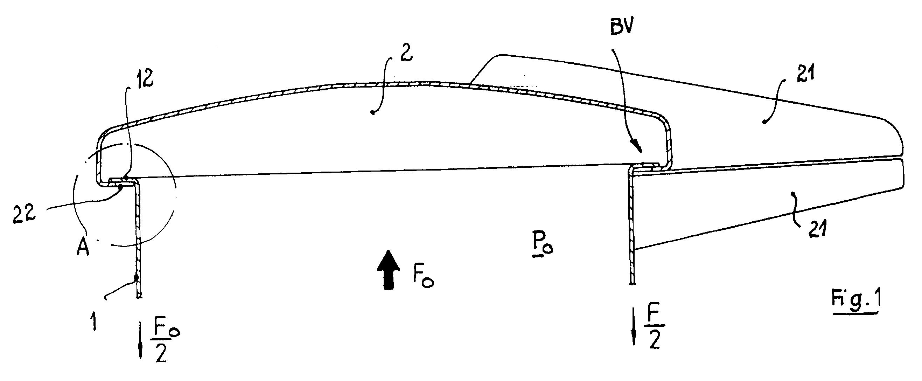

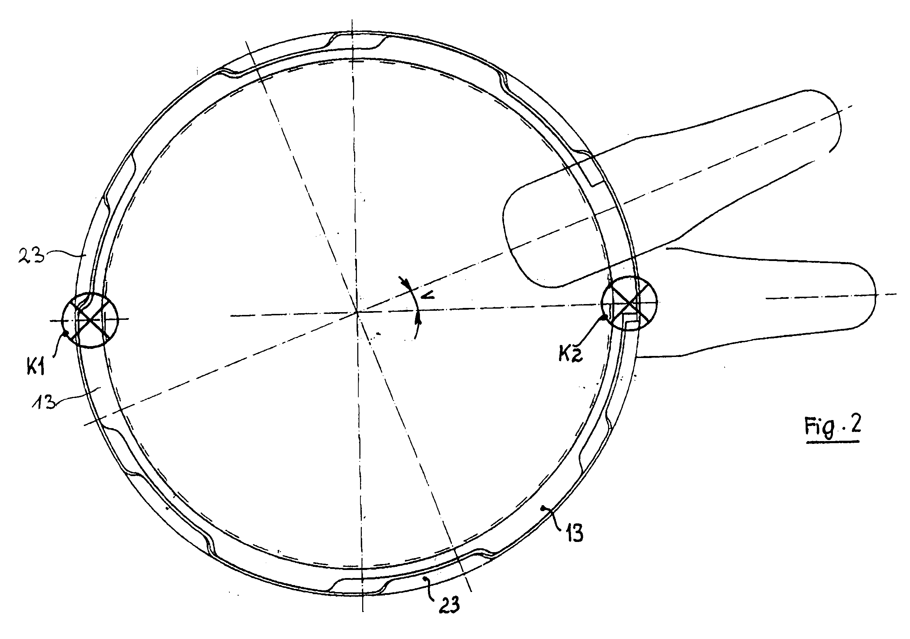

Ein Dampfdruck-Kochgefäß besteht entsprechend Fig. 1 in bekannter Weise aus einem Kochgefäß 1 und einem Deckel 2, die beide mit jeweils einem Handgriff 11 bzw. 21 versehen sind. Die Handgriffe 11 und 21 sind bei geschlossenem Dampfdruck-Kochgefäß zur besseren Handhabung und zur Signalisierung des Betriebszustandes übereinanderliegend vorgesehen. Der Deckel 2 überfängt mit einem nach innen abgekanteten Deckelrand 22 einen an dem Kochgefäß 1 nach außen weisenden Kragenrand 12; an dem Deckelrand 22 und dem Kragenrand 12 ist (Fig. 2) ein Bajonettverschluß BV ausgebildet, der aus mehreren Verschlußlaschen 13 an dem Kochgefäß 1 und einer gleichen Anzahl von Verschlußlaschen 23 an dem Deckel 2 besteht und eine Öffnung des Dampfdruck-Kochgefäßes verhindert, wenn in dem Dampfdruck-Kochgefäß ein den atmosphärischen Druck übersteigender Innendruck P herrscht. Der Innendruck P erzeugt eine Druckkraft F auf den Deckel 2, die von dem Bajonettverschluß BV abgefangen wird. In der Fig. 2 ist der Deckel 2 um einen Verschlußwinkel V soweit verschwenkt, daß die Verschlußlaschen 13 und 23 außer Eingriff geraten sind: das Dampfdruck-Kochgefäß ist geöffnet.

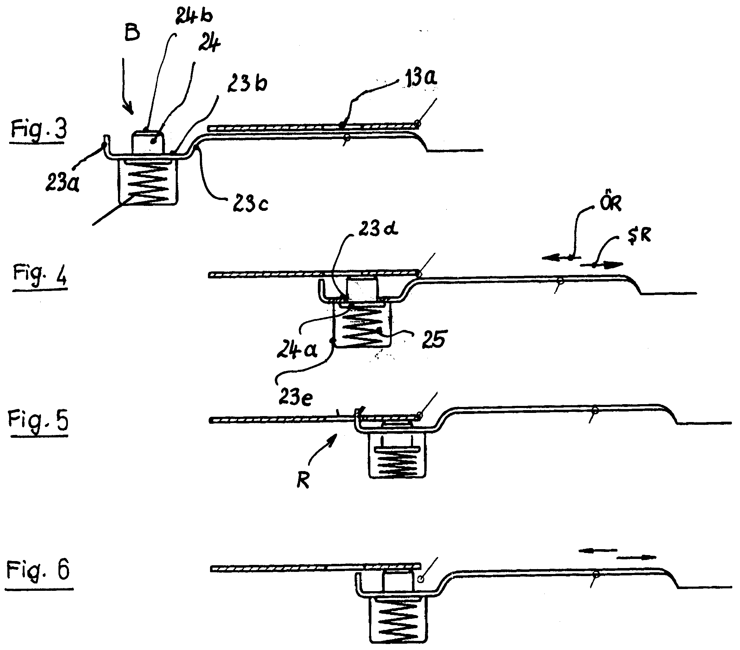

In den Fig. 3 bis 6 ist jeweils ein Querschnitt durch einen Teil des Bajonettverschlusses BV dargestellt in dem Umkreis einer Einzelheit A aus der Fig. 1, in der je eine Rastung R und eine zu dieser gehörige Betätigung B vorgesehen sind. In der Fig. 2 sind zwei dieser Bereiche vorgesehen und mit K1 und K2 gekennzeichnet; die zugehörigen Einzelteile liegen sich, verteilt auf den Kragenrand 12 und den Deckelrand 22, jeweils einander genau diametral gegenüber, so daß die einzelne Betätigung B, wie später noch gezeigt wird, entsprechend Fig. 1 genau mit der Hälfte der Druckkraft F angetrieben wird. Selbstverständlich sind auch mehr als zwei derartige Bereiche denkbar, wobei sich die Druckkraft F weiter aufgliedert.

Die Rastung R besteht aus einer Rastausnehmung 13a in einer der an dem Kochgefäß 1 befindlichen Verschlußlaschen 13, in einfacher Weise als Durchbrechung ausgebildet, sowie aus einer in die Rastausnehmung 13a einführbaren Rastklinke 23a, die sich am äußeren Ende eines Flächenstückes 23b befindet. Das Flächenstück 23b ist mittels einer Kröpfung 23c aus der Verschlußlasche 23 am Deckel 2 tangential gerichtet abgekantet und von der Verschlußlasche 13 flächenparallel beabstandet.

In der Schließstellung der Fig. 3 befindet sich die Rastklinke 23a außer Eingriff mit der Rastausnehmung 13a und von dieser im größtmöglichen Abstand. Bei einer der Schließrichtung SR entgegengerichteten Verschwenkung des Deckels 2 im Bajonettverschluß BV in Öffnungsrichtung ÖR gerät die Rastklinke 23a in das Umfeld der Rastausnehmung 13a, wenn die Kröpfung 23c an das Ende 13b der Verschlußlasche 13 gelangt ist. Bei weiterer Verschwenkung wird eine Druckkraft F von den Verschlußlaschen 13,23 nicht mehr abgefangen und drückt - diesen bewegend - auf den Deckel 2,bis sie einer entgegengerichteten Reaktionskraft gleich ist, wobei die Rastklinke 23a in die Rastausnehmung 13a einfällt: Der Deckel 2 ist an dem Kochgefäß 1 unverdrehbar verrastet.

Das Flächenstück 23b ist Teil einer Betätigung B für die Rastung R. Weiterhin gehört dazu ein Stützbolzen 24, der in einer Bohrung 23d des Flächenstückes 23b axial verschiebbar beweglich ist in einem Intervall, das von einem an das Flächenstück 23b anschlagenden Anschlagbund 24a des Stützbolzens 24 und der Blocklänge einer Gegenfeder 25 begrenzt ist, die den Stützbolzen 24 belastet. Die Gegenfeder 25 ist dabei andererseits an einem Widerlager 23e abgestützt, das ortsfest an dem Flächenstück 23b vorgesehen ist. Die Anordnung ist so getroffen, daß die Gegenfeder 25 den Stützbolzen 24 in Richtung auf die Verschlußlasche 13 des Kochgefäßes 1 belastet, an der dementsprechend eine Stützfläche 24b des Stützbolzens 24 beständig anliegt, es sei denn, der Bajonettverschluß BV ist in die Schließstellung der Fig. 3 verschwenkt.

Befindet sich der Deckel 2 in der Raststellung der Fig. 5, dann wird er durch die Kraft F bzw. einen Teil davon gegen die Federwirkung der Gegenfeder 25 soweit in Richtung seiner Achse verschoben, bis Kräftegleichgewicht hergestellt ist. Je nach der Höhe des Innendruckes P in dem Dampfdruck-Kochgefäß wird die Rastung R wirksam oder nicht, d.h. die Rastung R ist nur aufhebbar, wenn ein gerade noch zulässiger, für das Öffnen ungefährlicher Innendruck P unterschritten ist (Fig. 6). Die Vorspannkraft der Feder 25 wird entsprechend gewählt.

Auf diese Weise wirken die Bereiche K1 und K2 der Fig. 2 als Kontrollstellen beim Öffnen, in denen der Innendruck P gemessen wird; wird ein vorgegebener Wert überschritten, wird der Deckel 2 **nichtöffenbar** an dem Kochgefäß 1 verrastet, bis der Innendruck P in den zulässigen Wertebereich abgesunken ist.

Verschwindet die in der Gegenfeder 25 gespeicherte Lageenergie, beispielsweise, wenn die Gegenfeder 25 gebrochen ist, dann bleibt die Absicherung bestehen; der Deckel 2 kann dann erst geöffnet werden, wenn ein vollständiger Druckausgleich herbeigeführt und der Innendruck P verschwunden ist.

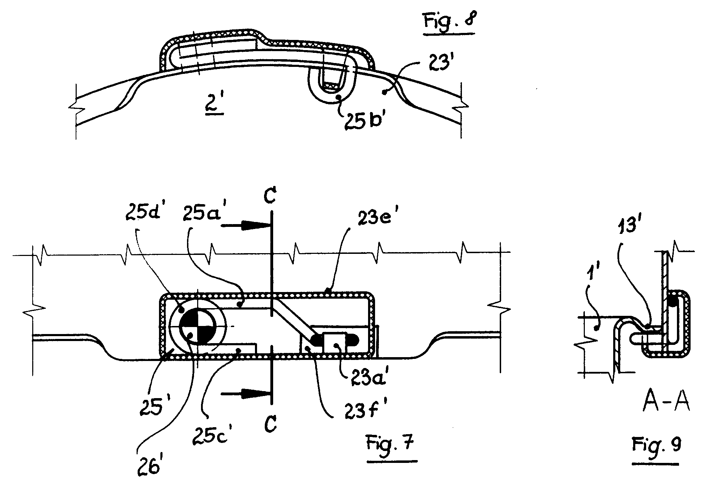

Bei der konstruktiv leicht veränderten erfindungsgemäßen Anordnung der Fig. 7 bis 9 sind alle Bezugszeichen zum Unterschied von der vorigen Anordnung gestrichen eingetragen; dabei stimmen sie aber ansonsten mit den bereits verwendeten Bezugszeichen überein, wenn sie funktional gleiche Bauelemente kennzeichnen.

Die Gegenfeder 25' ist hier als drahtförmige Drehfeder ausgebildet, die mit ihren (Draht-) Wendeln 25d' über einen an dem Deckel 2' befestigten Niet 26' gelegt ist; ihr erster Federschenkel 25a' läuft in eine Öse 25b' aus, die - dabei die Verschlußlasche 23' des Deckels 2' in einer Ausnehmung 23f' durchgreifend - mit Vorspannung an der benachbarten Verschlußlasche 13' des Kochgefäßes 1' anliegt. Die Vorspannung ist durch Änderung der Zahl der Wendeln 25d' oder andere Parameter einstellbar und nimmt zu, wenn der Innendruck P in dem Kochgefäß 1' ansteigt. Dabei gerät bei einer Federkraft F oberhalb der zu dem Ausgangs-Innendruck Pₒ des Kochgefäßes 1 gehörige Vorspann-Federkraft Fₒ die Rastklinke 23a' in die (in den Fig. 7 bis 9 nicht sichtbare) Rastausnehmung 13a' und verrastet den Bajonettverschluß BV; die Rastklinke 23a' ist in der Öse 25b' längsbeweglich geführt und ansonsten Teil des Widerlagers 23e', das hier als abdeckendes Gehäuse ausgebildet ist und auch als Anschlag sowohl des ersten, die Öse 25b' tragenden Federschenkels 25a' als auch eines weiteren Federschenkels 25c' dient, so daß die Gegenfeder 25' vorgespannt zusammen mit dem Widerlager 23e' bequem montierbar ist.

### Aufstellung der Bezugszeichen

- 1,1': Kochgefäß
- 11: Handgriff
- 12: Kragenrand
- 13,13': Verschlußlasche
- 13a: Rastausnehmung
- 2,2': Deckel
- 21: Handgriff
- 22: Deckelrand
- 23,23': Verschlußlasche
- 23a,23a': Rastklinke
- 23b: Flächenstück
- 23c: Kröpfung
- 23d: Bohrung
- 23e,23e': Widerlager
- 23f': Ausnehmung
- 24: Stützbolzen
- 24a: Anschlagbund
- 24b: Stützfläche
- 25,25': Gegenfeder
- 25a': (erster) Federschenkel
- 25b': Öse
- 25c': Federschenkel
- 25d': Wendel
- 26': Niet
- B: Betätigung
- BV: Bajonettverschluß
- F: Druckkraft
- K1,K2: Bereich
- ÖR: Öffnungsrichtung
- P: Innendruck
- R: Rastung
- SR: Schließrichtung
- V: Verschlußwinkel

## Patentansprüche

1. Dampfdruck-Kochgefäß, beispielsweise Schnellkochtopf, Schnellkochpfanne oder dergleichen, bestehend aus einem Kochgefäß (1,1') und einem Deckel (2,2'), die miteinander mittels eines Bajonettverschlusses (BV) verriegelbar sind, der von komplementär angeordneten, jeweils einstückig an dem Kochgefäß (1,1') und dem Deckel (2,2') vorgesehenen Verschlußlaschen (13, 13', 23, 23') gebildet wird,
dadurch gekennzeichnet, daß
(a) eine vorgespannte Gegenfeder (25,25') zwischen mindestens einem Paar zweier einander zugeordneter Verschlußlaschen (13,13',23,23') des Kochgefäßes (1) und des Deckels (2,2') angeordnet und auf eine Vorspann-Federkraft (Fₒ) vorgespannt ist, durch die - bis zu einen bestimmten Ausgangs-Innendruck (Pₒ) des Kochgefäßes (1) - die Verschlußlaschen (13,13',23,23') voneinander so beabstandet sind, daß der Bajonettverschluß (BV) gelöst werden kann, und dazu
(b) an den Verschlußlaschen (13,13',23,23') eine Rastung (R) vorgesehen ist, die den Bajonettverschluß (BV) blockiert, wenn der Innendruck (P) den Ausgangs-Innendruck (Pₒ) übersteigt und dadurch die Verschlußlaschen (13,13',23,23') gegen die dabei über die Vorspann-Federkraft (Fₒ) zunehmende Federkraft (F) der Gegenfeder (25,25') aufeinander zu bewegt werden.

2. Dampfdruck-Kochgefäß nach Anspruch 1, dadurch gekennzeichnet, daß die Rastung (R) aus einer in der jeweiligen Verschlußlasche (13,13') des Kochgefäßes (1) vorgesehenen Rastausnehmung (13a) und aus einer an der jeweiligen Verschlußlasche (23,23') des Deckels (2,2') angebrachten, in die Rastausnehmung (13a) einführbaren Rastklinke (23a) besteht.

3. Dampfdruck-Kochgefäß nach Anspruch 1 und 2, dadurch gekennzeichnet, daß die Verschlußlasche (23) des Deckels (2) mit einer von der anliegenden Verschlußlasche (13) des Kochgefäßes (1) zurücksetzenden Kröpfung (23c) versehen ist, deren abgekröpftes, zu den Verschlußlaschen (13,23) flächenparalleles Flächenstück (23b) in der am Rande der Verschlußlasche (23) befindlichen, wieder in die Ebene der Verschlußlasche (23) zurückkröpfenden Rastklinke (23a) endet in der Weise, daß die Rastklinke (23a) gerade aus der Rastausnehmung (13a) ausgerastet ist, wenn der Innendruck (P) auf den Ausgangs-Innendruck (Pₒ) gesunken ist.

4. Dampfdruck-Kochgefäß nach Anspruch 1 bis 3, dadurch gekennzeichnet, daß die Betätigung (B) für die Rastung (R) aus einem mit einem Anschlagbund (24a) an dem Flächenstück (23b) anschlagenden, in einer Bohrung (23d) des Flächenstückes (23b) senkrecht zu diesem verschiebbaren Stützbolzen (24) besteht, der unter dem Einfluß der Federkraft (F) einer an dem Flächenstück (23b) gehalterten Gegenfeder (25) so weit in Richtung auf die Verschlußlasche (13) des Kochgefäßes (1) bewegbar ist, daß seine stirnseitige Stützfläche (24b) an der Oberfläche der Verschlußlasche (13) des Kochgefäßes (1) anschlägt oder mit deren Ebene bündig ist.

5. Dampfdruck-Kochgefäß nach Anspruch 1 und 2, dadurch gekennzeichnet, daß am Umfang des Deckels (2') die als beispielsweise drahtförmige Drehfeder ausgebildete Gegenfeder (25') so befestigt ist, daß sie mit einem ersten ihrer freien Federschenkel (25a') eine der Verschlußlaschen (23') des Deckels (2') unterfängt, wobei dieser Federschenkel (25a') mit der Federkraft (F) druckbelastend an der zugehörigen Verschlußlasche (13') des Kochgefäßes (1') anliegt.

6. Dampfdruck-Kochgefäß nach Anspruch 5, dadurch gekennzeichnet, daß die Gegenfeder (25') von einem an dem Deckel (2') ortsfesten Widerlager (23e') überfangen ist, an welchem einstückig die Rastklinke (23a') vorgesehen ist.

7. Dampfdruck-Kochgefäß nach Anspruch 6, dadurch gekennzeichnet, daß die Rastklinke (23a') in einer an dem ersten Federschenkel (25a') ausgebildeten Öse (25b') geführt ist.

8. Dampfdruck-Kochgefäß nach einem der Ansprüche 5 bis 7, dadurch gekennzeichnet, daß die Gegenfeder (25') auf einem an dem Deckel (2') befestigten Niet (26') gelagert ist und ihre freien Federschenkel (25a',25c') in dem gehäuseartigen Widerlager (23a') anschlagen.

9. Dampfdruck-Kochgefäß nach einem der Ansprüche 5 bis 8, dadurch gekennzeichnet, daß die Verschlußlasche (23') des Deckels (2') mit einer Ausnehmung (23f') versehen ist, die von der Öse (25b') durchgreifbar ist.

10. Dampfdruck-Kochgefäß nach einem der Ansprüche 5 bis 8, dadurch gekennzeichnet, daß der erste Federschenkel (25a') die Berandung der Verschlußlasche (23') unterfangend abgekröpft ist.

11. Dampfdruck-Kochgefäß nach einem der Ansprüche 3 oder 4 oder einem der Ansprüche 5 bis 10, dadurch gekennzeichnet, daß das Flächenstück (23b) einschließlich einem Widerlager (23e,23e') für die Gegenfeder (25,25') durch den auf den Deckel (2,2') wirkenden Innendruck (P) des Kochgefäßes (1') in Richtung auf die Verschlußlasche (13,13') des Kochgefäßes (1,1') bewegbar ist, wenn sich die Rastklinke (23a,23a') in Front der Rastausnehmung (13a) befindet.

12. Dampfdruck-Kochgefäß nach einem der Ansprüche 1 bis 11, dadurch gekennzeichnet, daß die Vorspannkraft der Gegenfeder (25,25') einstellbar ist.

13. Dampfdruck-Kochgefäß nach einem der Ansprüche 1 bis 12, dadurch gekennzeichnet, daß die Rastungen (R) so an den Verschlußlaschen (13,13',23,23') angeordnet sind, daß sie wirksam werden, wenn beim Öffnen des Kochgefäßes (1,1') etwa der halbe Verschlußwinkel (V) des Bajonettverschlusses (BV) überstrichen ist.
